# EUROPÄISCHE PATENTSCHRIFT

(11) **EP 1 191 177 B1**
(45) Veröffentlichungstag und Bekanntmachung des Hinweises auf die Patenterteilung: **07.01.2009**
(21) Anmeldenummer: 01119425.5
(22) Anmeldetag: 11.08.2001
(51) Int. Cl.: E05D 15/58, B60J 5/04

(54) **Öffnungsvorrichtung**
Opening device
Dispositif d'ouverture

(30) Priorität: 22.09.2000 DE 10047071
(43) Veröffentlichungstag der Anmeldung: 27.03.2002
(73) Patentinhaber: HAPPICH Fahrzeug- und Industrieteile GmbH, 42285 Wuppertal (DE)
(72) Erfinder: Marcus, Armin, 42399 Wuppertal (DE); Gebel, Thomas, 42111 Wuppertal (DE)

(56) Entgegenhaltungen:
- DE-C- 503 458
- DE-C1- 4 131 356
- US-A- 4 702 514

## Beschreibung

Die Erfindung bezieht sich auf eine Öffnungsvorrichtung für eine eine Öffnung einer Fahrzeugwand verschließende Fahrzeugklappe.

Fahrzeuge, insbesondere Großraumfahrzeuge wie Omnibusse weisen eine Reihe von Fahrzeugklappen auf, die oftmals zu öffnen sind, insbesondere dann, wenn es sich um Kofferklappen von Omnibussen handelt. Die klassische Anordnung einer Fahrzeugklappe an einer Fahrzeugwand erfolgt mittels einer in der DE 22 39 354 C2 gezeigten Scharnierleiste, an der die Fahrzeugklappe schwenkbeweglich befestigt ist. In der geschlossenen Lage hängt die Fahrzeugklappe an der elastischen Scharnierleiste, die die Fahrzeugwand bzw. deren tragendes Gerippe mit der Fahrzeugklappe verbindet. Zum Öffnen muß die Fahrzeugklappe hochgeschwenkt werden, was nicht nur recht mühsam ist, sondern auch einen großen Platzaufwand erfordert, weil der Platzaufwand gleich Klappenhöhe ist. Die gleichen Verhältnisse liegen auch bei einer Kofferklappenanordnung vor, die in der DE 29 41 858 C2 gezeigt ist.

Das DE-GM 1 884 186 zeigt einen Bewegungsmechanismus für seitliche Kofferraumklappen eines Omnibusses, der ein an der Kofferraumklappe befestigtes Lenkgestänge umfaßt, welches die Kofferraumklappe aus der Kofferraumöffnung und vor eine Fahrzeugwand verschwenkt. Die Schwenkung der beiden Lenker, die innerhalb des Kofferraums einen gewissen Platzbedarf benötigen, führt zu einer dieser Verschwenkung in der Größe entsprechenden Verschiebung der Kofferraumklappe.

Die US 4702514 offenbart alle Merkmale des Oberbegriffs des Anspruchs 1.

Der Erfindung liegt die Aufgabe zugrunde, eine Öffnungsvorrichtung der eingangs genannten Art zur Verfügung zu stellen, die bei geringem Platzbedarf eine langstreckige Öffnungsbewegung der Fahrzeugklappe ermöglicht.

Gemäß der Erfindung wird diese Aufgabe durch die im Anspruch 1 angegebenen Maßnahmen gelöst, während die Unteransprüche zweckmäßige Ausgestaltungen und vorteilhafte Weiterbildungen der Erfindung angeben.

Die Erfindung wird nachfolgend anhand der Zeichnungen beispielhaft näher erläutert, und es zeigen:
- Fig. 1: eine frontale Teilansicht auf das Gerippe einer Fahrzeugwand mit einer Fahrzeugklappe,
- Fig. 2: einen Schnitt etwa folgend der Linie II - II in Fig. 1,
- Fig. 3: in schematischer Darstellungsmanier einen ersten Bewegungsmechanismus zum Herausbewegen der Fahrzeugklappe aus der Schließebene,
- Fig. 4: in schematischer Darstellungsmanier einen ersten Bewegungsmechanismus zum Herausbewegen der Fahrzeugklappe aus der Schließebene in einer gegenüber Fig. 3 abgewandelten Ausführungsform,
- Fig. 5: die Teilansicht auf das Gerippe einer Fahrzeugwand mit einer geschlossenen Fahrzeugklappe entsprechend Fig. 1 jedoch von hinten gesehen,
- Fig. 6: die Ansicht nach Fig. 5 jedoch mit geöffneter Fahrzeugklappe und
- Fig. 7: eine schaubildliche Ansicht eines der beiden Getriebehebelsysteme.

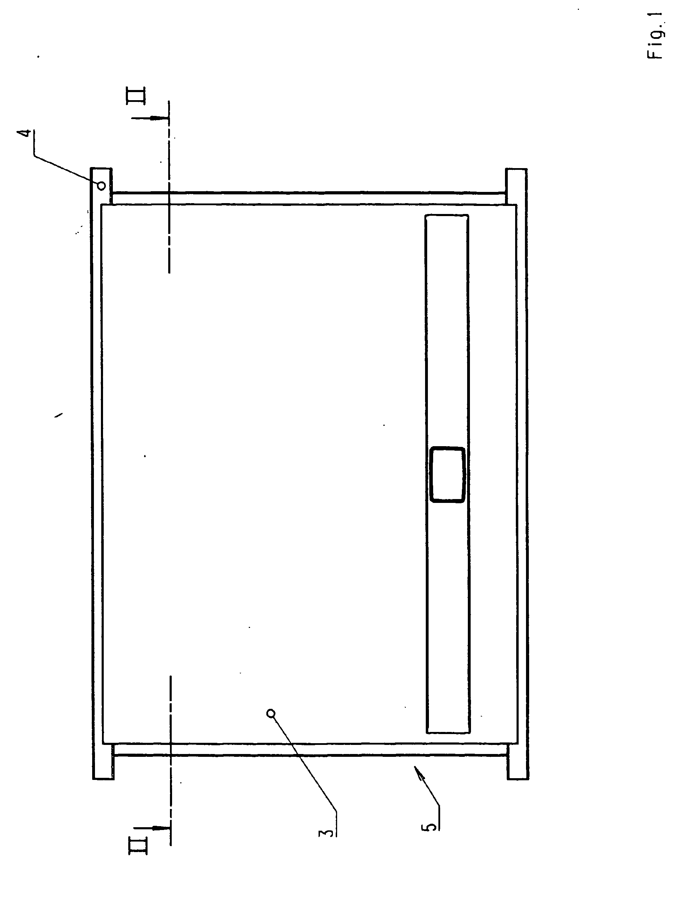

Die neue Öffnungsvorrichtung ist für eine eine Öffnung 1 einer Fahrzeugwand 2 verschließende Fahrzeugklappe 3, insbesondere Kofferraumklappe vorgesehen. Fig. 1 zeigt eine Teilansicht des Gerippes 4 der Fahrzeugwand 2, in Sonderheit einen durch das Gerippe 4 gebildeten Rahmen 5, der die Öffnung 1 umschließt.

Zum Öffnen der Fahrzeugklappe 3 dient ein erster Bewegungsmechanismus mittels dem die Fahrzeugklappe 3 aus der Schließebene in eine Öffnungsebene herausbewegt wird. Dieser erste Bewegungsmechanismus kann eine im unteren Bereich der Fahrzeugklappe 3 horizontal ausgerichtete und am Gerippe 4 gelagerte Achse 6 umfassen, um die die Fahrzeugklappe 3 in eine Schräglage schwenkbar ist.

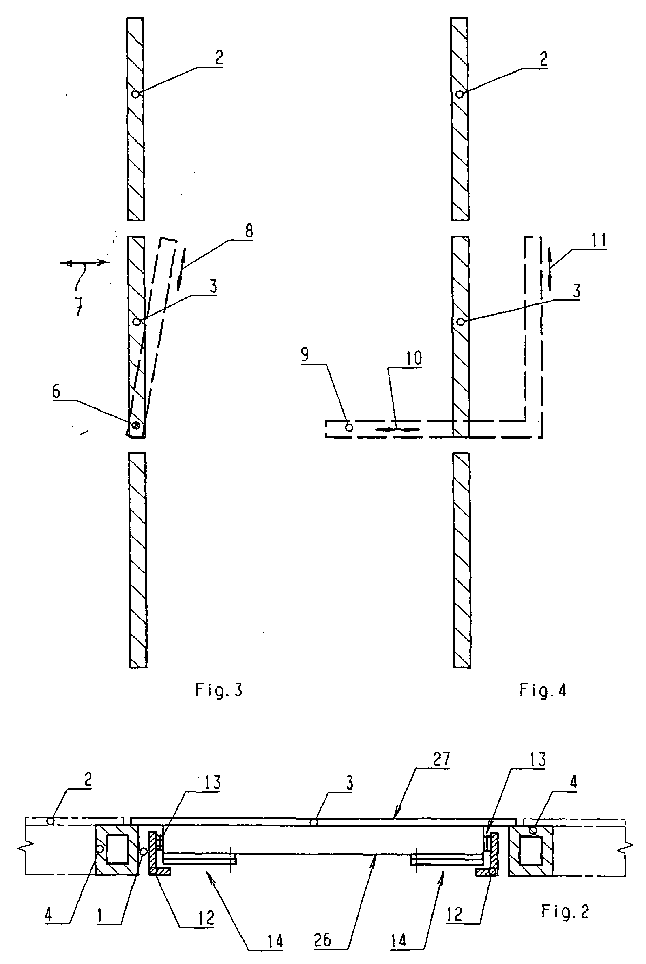

In Fig. 3 ist schematisch gezeigt, daß die Fahrzeugklappe 3 aus ihrer mit durchlaufenden Linien dargestellten Schließebene in die gestrichelt dargestellte Öffnungsebene schwenkbar ist. Der Doppelpfeil 7 verdeutlicht die Einschwenk- und Ausschwenkrichtung, kann aber auch als Symbol für einen fernbetätigbaren Antrieb für die Einschwenk- und Ausschwenkbewegung stehen. Befindet sich die Fahrzeugklappe 3 in der Öffnungsebene, so kann sie gemäß Doppelpfeil 8 zum Öffnen aufwärts bzw. zum Schließen abwärts bewegt werden, wobei es auch hier denkbar ist, die Bewegung durch einen an die Fahrzeugklappe angreifenden fernbetätigbaren Antrieb herbeizuführen.

Gemäß Fig. 4 kann der erste Bewegungsmechanismus, wie schematisch dargestellt, auch nach Art einer Linear- oder Schubladenführung ausgebildet sein, wobei ein mit der Fahrzeugklappe 3 verbundener Schlitten 9 in Doppelpfeilrichtung 10 auf einer Horizontalebene verfahrbar ist. In Fig. 4 ist wiederum mit durchlaufenden Linien die Schließebene und mit gestrichelten Linien die Öffnungsebene der Fahrzeugklappe 3 dargestellt. Dem Doppelpfeil 11 kommt die zum Doppelpfeil 8 in Fig. 3 erläuterte Bedeutung zu, allein mit dem Unterschied, daß die Fahrzeugklappe 3 parallel zur Fahrzeugwand bewegbar ist.

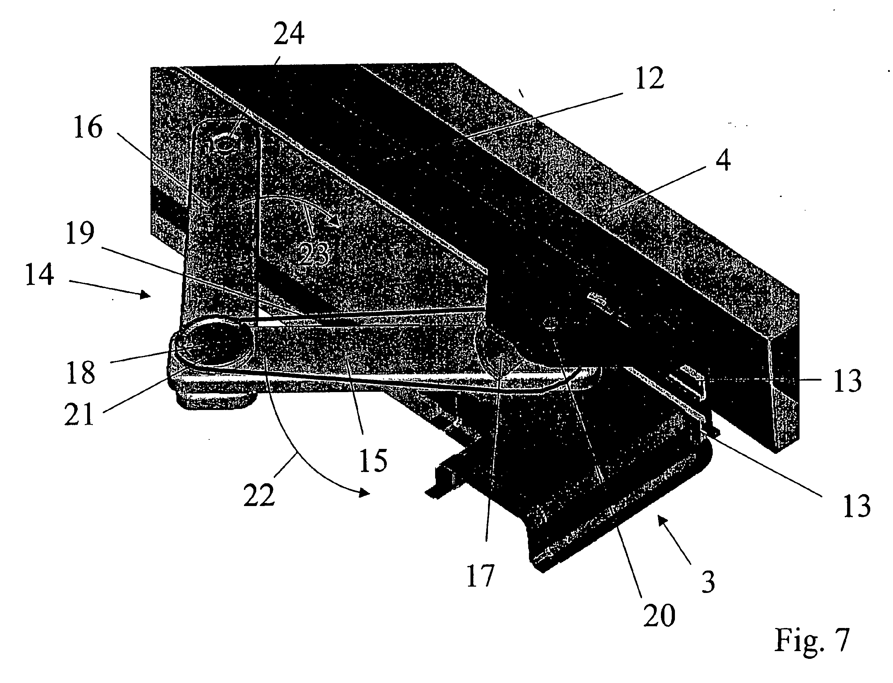

Die Fahrzeugklappe 3 ist zwischen zwei Profilleisten 12 aufgenommen, und zwar derart, daß sie daran in Doppelpfeilrichtung 8 bzw. 11 bewegbar ist. Zum Bewegungsablauf sind zunächst an den Profilleisten 12 einerseits und den diesen benachbarten Randkanten der Fahrzeugklappe 3 andererseits Führungsleisten 13 mit schwalbenschwanzartigen Führungsbahnen zur Aufnahme von nicht näher dargestellten Führungssteinen befestigt. Dabei befindet sich an jeder Fahrzeugklappenvertikalseite ein erster Führungsstein am unteren Endbereich der Fahrzeugklappe und ein zweiter Führungsstein am oberen Endbereich der Profilleiste 12, so daß sich für die Fahrzeugklappe 3 eine optimale Linearführung ergibt. Die Profilleisten 12 können am Rahmen 5 des Gerippes 4 wie in Fig. 4 gezeigt angeordnet oder wie in Fig. 3 und 5 - 7 gezeigt, daran angelenkt sein.

Zur neuen Öffnungsvorrichtung gehört insbesondere ein zweiter Bewegungmechanismus mittels dem die Fahrzeugklappe 3 die Öffnung 1 freigebend vor die nach oben an die Öffnung 1 angrenzende Fahrzeugwand längs der Öffnungsebene verlagerbar ist. Dieser zweite Bewegungsmechanismus umfaßt ein Paar von Getriebehebelsystemen 14 und jedes Getriebehebelsystem eine Getriebeeinrichtung sowie zwei parallel zur Fahrzeugklappe 3 ausgerichtete, einendig aneinander angelenkte Hebel 15 und 16, von denen der erste Hebel 15 anderendig an einer der zur Halterung und Führung der Fahrzeugklappe dienenden Profilleiste 12 und der zweite Hebel 16 anderendig an der Fahrzeugklappe 3 am Drehpunkt 24 angelenkt ist.

Die Getriebeeinrichtung weist jeweils ein erstes Getrieberad 17, ein gegenüber diesem im Durchmesser kleineres zweites Getrieberad 18 sowie ein die Getrieberäder 17, 18 miteinander verbindendes Verbindungsorgan 19, welches als Drahtseil, Zahnriemen oder Kette ausgebildet ist, auf. Das erste Getrieberad 18 sitzt jeweils am Gelenkpunkt 20 des ersten Hebels 15 an einer der Profilleisten 12, während das zweite Getrieberad jeweils am Anlenkpunkt 21 der aneinander angelenkten Hebel 15, 16 sitzt. Dabei ist die Anordnung so getroffen, daß das erste Getrieberad 17 jeweils feststehend an einer Profilleiste 12 und das zweite Getrieberad 18 jeweils feststehend an einem zweiten Hebel 16 sitzt. Der erste Hebel 15 und der zweite Hebel 16 sind jeweils gleich lang und für die Getriebeeinrichtung ist ein Übersetzungsverhältnis von 2 : 1 vorgesehen.

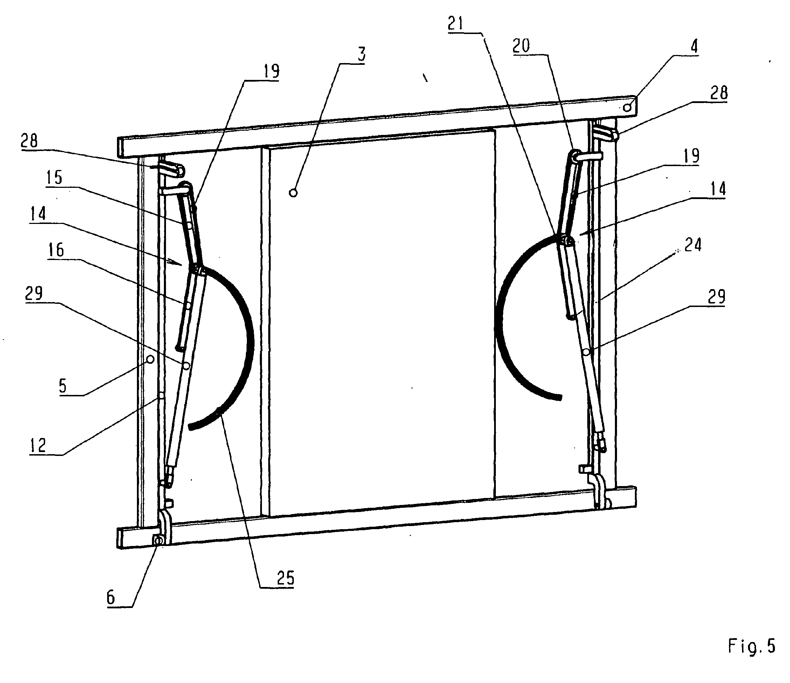

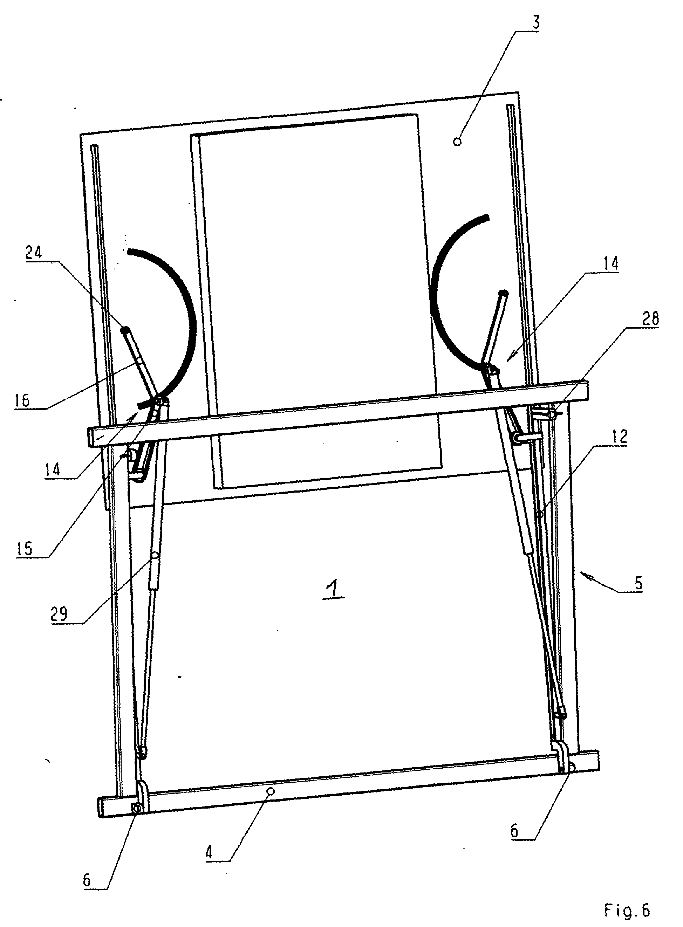

Beim Überführen der Fahrzeugklappe 3 aus ihrer geschlossenen Position (vgl. z. B. Fig. 5) in ihre geöffnete Position (vgl. z. B. Fig. 6) bewegen sich die ersten Hebel 15 in Pfeilrichtung 22 und die zweiten Hebel 16 in Pfeilrichtung 23. Dabei wandern die Drehpunkte 24 aus ihrer unteren Lage nach Fig. 5 unter Mitnahme der Fahrzeugklappe 3 in ihre obere Lage nach Fig. 6 und das Verbindungsorgan 19 dreht sich um 180 Winkelgrade um das erste Getrieberad 17, das daher auch als etwa Halbrad ausgeführt sein kann, und gleichzeitig um 360 Winkelgrade um das zweite Getrieberad 18. Wesentlich ist, daß das Verbindungsorgan 19 auf dem ersten Getrieberad 17 abläuft und die Drehbewegung auf das zweite Getrieberad 18 überträgt, und zwar mit einem Übersetzungsverhältnis von 2 : 1. Beim Öffnen der Fahrzeugklappe 3 wird durch eine Drehung des ersten Hebels 15 um 90 ° auf den zweiten Hebel 16 eine Drehung um 180° in entgegengesetzter Richtung erzeugt. Da der Bewegungsablauf somit zwangsgesteuert ist, wandern die Drehpunkte 24, die gleichzeitig die Befestigungspunkte der Fahrzeugklappe 3 sind, parallel zur Hubbewegung mit, womit auch die Fahrzeugklappe 3 in ihrer ausgefahrenen obersten Position (vgl. Fig. 6) gegen ein Verkanten gesichert ist. Um die genannte Zwangs- und Parallelführung zu optimieren, sind an der Rückseite der Fahrzeugklappe 3 etwa halbkreisförmig ausgebildete kulissenartige Führungsnuten 25 vorgesehen, in die nicht näher dargestellte Bolzenverlängerungen der Anlenkpunkte 21 zwangsgeführt eingreifen. Die Führungsnuten 25 sind zweckmäßigerweise im Innenblech 26 der aus Außenblech und Innenblech bestehenden Fahrzeugklappe 3 ausgebildet.

Beim Ausführungsbeispiel nach Fig. 5 und 6 ist ein Bewegungsablauf, wie schematisch in Fig. 3 gezeigt, vorgesehen. Es ist erkennbar, daß die Profilleisten 12 am unteren Ende abgekröpft und hier an Lagerböckchen angelenkt sind, die ihrerseits am Rahmen 5 befestigt sind. Die Achse 6 nach Fig. 3 ist also hier in zwei miteinander fluchtende Achszapfen unterteilt.

Aus Fig. 5 und 6 ist auch ersichtlich, daß die Schwenkbewegung der Fahrzeugklappe 3 in die Öffnungsebene durch an den Profilleisten 12 angeordnete Anschlagelemente 28, die mit am Rahmen 5 angeordneten Gegenanschlagelementen zusammenwirken, begrenzt ist. Die Anschlagelemente 28 können in einfacher Weise aus zu den Profilleisten 12 gehörenden Laschen mit Langloch bestehen in denen am Rahmen 5 sitzende Bolzen geführt sind.

Zu erwähnen ist noch, daß die Anlenk- oder Drehpunkte 20, 24 mit Kugellagern ausgerüstet werden sollten, um eine Lochlaibung zu verhindern. Auch ist noch zu erwähnen, daß die Fahrzeugklappe 3 durch hydropneumatische Druckzylinder 29 gehalten wird.

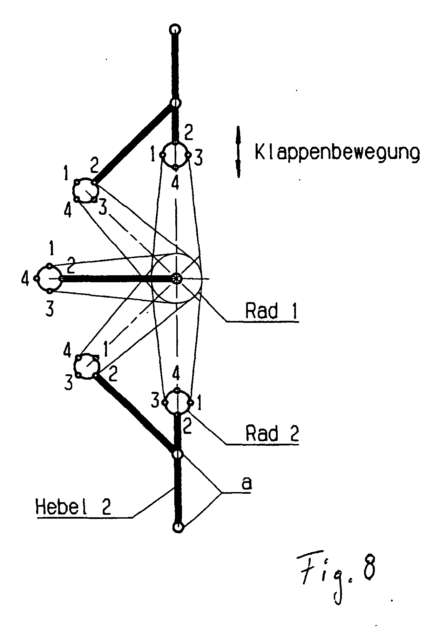

Die noch beigefügte Fig. 8 zeigt das Getriebehebelsystem-Prinzip, das einen z. B. drehbaren Klappenbefestigungspunkt parallel zur Hubbewegung führt und die Klappe in geöffneter oberster Position gegen Verkanten sichert. Für eine vertikale Bewegung ist ein Herausfahren der Klappe um Klappentiefe erforderlich, wozu z. B. eine Scharnierlösung im unteren Klappenbereich gewählt werden kann. Bei Bewegung der Klappe entsteht eine Abrollbewegung des z. B. Drahtseils auf dem feststehenden Rad 1, die eine entgegengesetzte Drehung des Rads 2 und dem hiermit fest verbundenen Hebel 2 erzeugt. Durch ein Übersetzungsverhältnis von 2 : 1 entsteht nun eine parallel zur Klappenöffnung bewegte Führung des Befestigungspunkts a zur Klappe.

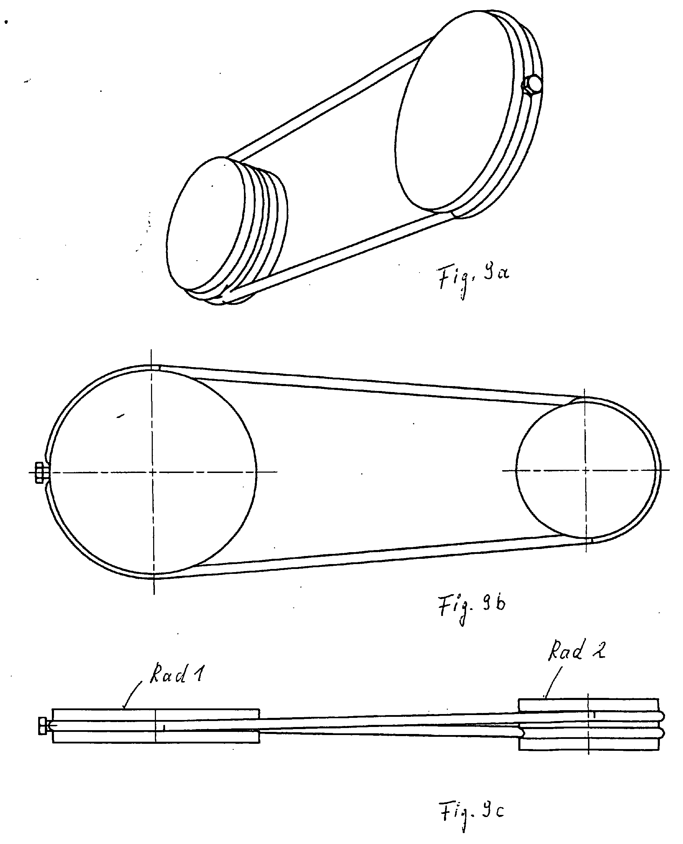

Neben möglichen Getriebeelementen wie Zahnriemen, Kette, Zahnräder usw. sieht die Erfindung als offenbar preiswerteste und funktionell stabilste Kraftübertragung bevorzugt eine Drahtseillösung vor. Eine solche Drahtseillösung ist in Fig. 9a, 9b und 9c gezeigt. Dabei ist durch die vorgesehene zweispurige Auslegung von Rad 2 und Befestigungsposition in Rad 1 gleichzeitig ein Spannen und bei Wartungsarbeiten ein Nachspannen (in Mittelposition Klappe) möglich.

## Patentansprüche

1. Öffnungsvorrichtung für eine eine Öffnung (1) einer Fahrzeugwand (2) verschließende Fahrzeugklappe (3) mit einem ersten Bewegungsmechanismus zum Herausbewegen der Fahrzeugklappe (3) aus der Schliessebene in eine Öffnungsebene und mit einem zweiten Bewegungsmechanismus mittels dem die Fahrzeugklappe (3) die Öffnung (1) freigebend vor die nach oben an die Öffnung (1) angrenzende Fahrzeugwand (2) längs der genannten Öffnungsebene verlagerbar ist, **dadurch gekennzeichnet, dass** der zweite Bewegungsmechanismus ein Paar von Getriebehebelsystemen (14) umfaßt und jedes Getriebehebelsystem (14) eine Getriebeeinrichtung sowie zwei parallel zur Fahrzeugklappe (3) ausgerichtete, einendig aneinandergelenkte Hebel (15, 16) aufweist, von denen der erste Hebel (15) anderendig an einer zur Halterung und Führung der Fahrzeugklappe (3) dienende Profilleiste (12) und der zweite Hebel (16) anderendig an der Fahrzeugklappe (3) angelenkt ist.

2. Öffnungsvorrichtung nach Anspruch 1, **dadurch gekennzeichnet, daß** der erste Bewegungsmechanismus mit zwei Profilleisten (12) zusammenwirkt, die zur Halterung und Führung der zwischen diesen längsverschiebbar aufgenommenen Fahrzeugklappe (3) vorgesehen sind.

3. Öffnungsvorrichtung nach Anspruch 1 oder 2, **dadurch gekennzeichnet, daß** der erste Bewegungsmechanismus eine am unteren Ende der Fahrzeugklappe (3) vorgesehene, am Fahrzeuggerippe (4) gehaltene Achse (6) aufweist, um die die Fahrzeugklappe (3) bis in eine, eine Verschiebebewegung ermöglichende Schräglage schwenkbar ist.

4. Öffnungsvorrichtung nach Anspruch 1 oder 2, **dadurch gekennzeichnet, daß** der erste Bewegungsmechanismus nach Art einer Linear- oder Schubladenführung ausgebildet ist, so daß die Fahrzeugklappe (3) nach dem Überführen aus der Schließebene in die Öffnungsebene parallel zur Fahrzeugwand (2) verschiebbar ist.

5. Öffnungsvorrichtung nach zumindest einem der vorangegangenen Ansprüche, **dadurch gekennzeichnet, daß** die Getriebeeinrichtung ein erstes Getrieberad (17), ein gegenüber diesem im Durchmesser kleineres zweite Getrieberad (18) sowie ein an den Getrieberädern (17, 18) auf- bzw. abrollbar festgelegtes Verbindungsorgan (19) aufweist, wobei das erste Getrieberad (17) am Anlenkpunkt (20) des ersten Hebels (15) an der Profilleiste (12) und das zweite Getrieberad (18) am Anlenkpunkt (21) der aneinander angelenkten Hebel (15, 16) sitzt und wobei das erste Getrieberad (17) feststehend an der Profilleiste (12) und das zweite Getrieberad (18) feststehend am zweiten Hebel (16) angeordnet ist.

6. Öffnungsvorrichtung nach zumindest einem der vorangegangenen Ansprüche, **dadurch gekennzeichnet, daß** die Getriebeeinrichtung ein Übersetzungsverhältnis von 2 : 1 aufweist.

7. Öffnungsvorrichtung nach Anspruch 5, **dadurch gekennzeichnet, daß** das über die Getrieberäder (17, 18) geführte Verbindungsorgan (19) als Drahtseil, Zahnriemen oder Kette ausgebildet ist.

8. Öffnungsvorrichtung nach zumindest einem der vorangegangenen Ansprüche, **dadurch gekennzeichnet, daß** an den Profilleisten (12) einerseits und den diesen benachbarten Randkanten der Fahrzeugklappe (3) andererseits Führungsleisten (13) mit schwalbenschwanzartigen Führungsbahnen zur Aufnahme von Führungssteinen befestigt sind.

9. Öffnungsvorrichtung nach zumindest einem der vorangegangenen Ansprüche, **dadurch gekennzeichnet, daß** die einendige Anlenkung der Hebel (17, 18) aneinander jeweils über Bolzen mit einer der Fahrzeugklappe (3) zugewandten Bolzenverlängerung erfolgt, die jeweils in eine in der Fahrzeugklappe (3) vorgesehene, etwa halbkreisförmig ausgebildete kulissenartige Führungsnut (25) eingreifen.

10. Öffnungsvorrichtung nach Anspruch 9, **dadurch gekennzeichnet, daß** die Führungsnuten (25) im Innenblech (26) der aus Außenblech (27) und Innenblech (26) bestehenden Fahrzeugklappe (3) ausgebildet sind.

## Claims

1. Opening device for a vehicle flap (3) which closes an opening (1) in a vehicle wall (2), with a first movement mechanism for moving the vehicle flap (3) out of the closing plane into an opening plane, and with a second movement mechanism by means of which the vehicle flap (3) can be displaced in front of the vehicle wall (2), which upwardly borders the opening (1), along the abovementioned opening plane such that the opening (1) is opened up, **characterized in that** the second movement mechanism comprises a pair of gear-lever systems (14), and each gear-lever system (14) has a gear arrangement and two levers (15, 16) which are oriented parallel to the vehicle flap (3), are coupled to each other at one end and of which the first lever (15) is coupled at the other end to a profiled bar (12) serving to secure and guide the vehicle flap (3), and the second lever (16) is coupled at the other end to the vehicle flap (3).

2. Opening device according to Claim 1, **characterized in that** the first movement mechanism interacts with two profiled bars (12) which are provided for securing and guiding the vehicle flap (3) which is held in a longitudinally displaceable manner therebetween.

3. Opening device according to Claim 1 or 2, **characterized in that** the first movement mechanism has a spindle (6) which is provided at the lower end of the vehicle flap (3), is held on the vehicle framework (4) and about which the vehicle flap (3) can be pivoted into an oblique position permitting displacement.

4. Opening device according to Claim 1 or 2, **characterized in that** the first movement mechanism is designed in the manner of a linear guide or drawer-type guide such that the vehicle flap (3), after being transferred from the closing plane into the opening plane, can be displaced parallel to the vehicle wall (2).

5. Opening device according to at least one of the preceding claims, **characterized in that** the gear arrangement has a first gear wheel (17), a second gear wheel (18) which is smaller in diameter than the first one, and a connecting member (19) which is fixed on the gear wheels (17, 18) in a manner such that it can be rolled up and down thereon, the first gear wheel (17) sitting on the coupling point (20) of the first lever (15) to the profiled bar (12), and the second gear wheel (18) sitting on the coupling point (21) of the levers (15, 16) which are coupled to each other, and the first gear wheel (17) being arranged in a manner fixed to the profiled bar (12) and the second gear wheel (18) being arranged in a manner fixed to the second lever (16).

6. Opening device according to at least one of the preceding claims, **characterized in that** the gear arrangement has a transmission ratio of 2:1.

7. Opening device according to Claim 5, **characterized in that** the connecting member (19) which is guided via the gear wheels (17, 18) is designed as a wire cable, a toothed belt or a chain.

8. Opening device according to at least one of the preceding claims, **characterized in that** guide bars (13) having dovetail-like guide tracks for receiving guide blocks are fastened to the profiled bars (12) and to those peripheral edges of the vehicle flap (3) which are adjacent to said profiled bars (12).

9. Opening device according to at least one of the preceding claims, **characterized in that** the levers (17, 18) are coupled to each other at one end via pins with a pin extension which faces the vehicle flap (3), the pins each engaging in a slotted-guide-type guide groove (25) which is provided in the vehicle flap (3) and is of approximately semicircular design.

10. Opening device according to Claim 9, **characterized in that** the guide grooves (25) are formed in the inner panel (26) of the vehicle flap (3) which comprises an outer panel (27) and an inner panel (26).

## Revendications

1. Dispositif d'ouverture pour un clapet de véhicule (3) fermant une ouverture (1) d'une paroi de véhicule (2), comportant un premier mécanisme pour déplacer le clapet de véhicule (3) du plan de fermeture à un plan d'ouverture et un deuxième mécanisme au moyen duquel le clapet de véhicule (3) est déplaçable le long du plan d'ouverture précité devant la paroi de véhicule (2) adjacente vers le haut à l'ouverture (1) en libérant l'ouverture (1), **caractérisé en ce que** le deuxième mécanisme comprend une paire de systèmes de leviers de transmission (14) et chaque système de leviers de transmission (14) présente un dispositif de transmission ainsi que deux leviers (15, 16) articulés l'un à l'autre par une extrémité et orientés parallèlement au clapet de véhicule (3), parmi lesquels le premier levier (15) est articulé par l'autre extrémité à une barre profilée (12) servant à maintenir et guider le clapet de véhicule (3) et le deuxième levier (16) est articulé par l'autre extrémité au clapet de véhicule (3).

2. Dispositif d'ouverture selon la revendication 1, **caractérisé en ce que** le premier mécanisme coopère avec deux barres profilées (12), qui sont prévues pour maintenir et guider le clapet de véhicule (3) logé entre celles-ci en translation longitudinale.

3. Dispositif d'ouverture selon la revendication 1 ou 2, **caractérisé en ce que** le premier mécanisme présente un axe (6) fixé à l'ossature du véhicule (4) et prévu à l'extrémité inférieure du clapet de véhicule (3), autour duquel le clapet de véhicule (3) peut pivoter jusqu'à une position inclinée permettant un mouvement coulissant.

4. Dispositif d'ouverture selon la revendication 1 ou 2, **caractérisé en ce que** le premier mécanisme est réalisé à la manière d'un guidage linéaire ou de tiroir, de telle manière que le clapet de véhicule (3) puisse être déplacé parallèlement à la paroi de véhicule (2) après le passage du plan de fermeture au plan d'ouverture.

5. Dispositif d'ouverture selon au moins une des revendications précédentes, **caractérisé en ce que** le dispositif de transmission comprend une première roue de transmission (17), une deuxième roue de transmission (18) de diamètre plus petit que celle-ci ainsi qu'un élément de liaison (19) enroulable ou déroulable attaché aux roues de transmission (17, 18), dans lequel la première roue de transmission (17) est montée au point d'articulation (20) du premier levier (15) sur la barre profilée (12) et la deuxième roue de transmission (18) est montée au point d'articulation (21) des leviers (15, 16) articulés l'un à l'autre et dans lequel la première roue de transmission (17) est disposée de manière permanente sur la barre profilée (12) et la deuxième roue de transmission (18) est disposée de manière permanente sur le deuxième levier (16).

6. Dispositif d'ouverture selon au moins une des revendications précédentes, **caractérisé en ce que** le dispositif de transmission présente un rapport de transmission de 2 : 1.

7. Dispositif d'ouverture selon la revendication 5, **caractérisé en ce que** l'élément de liaison (19) guidé sur les roues de transmission (17, 18) est un câble métallique, une courroie dentée ou une chaîne.

8. Dispositif d'ouverture selon au moins une des revendications précédentes, **caractérisé en ce que** des pistes de guidage (13) en queue d'aronde destinées à recevoir des coulisseaux de guidage sont fixées d'une part aux barres profilées (12) et d'autre part aux bords du clapet de véhicule (3) proches de ces dernières.

9. Dispositif d'ouverture selon au moins une des revendications précédentes, **caractérisé en ce que** l'articulation par une extrémité des leviers (17, 18) l'un à l'autre est réalisée chaque fois au moyen de boulons avec un prolongement de boulon tourné vers le clapet de véhicule (3), qui s'engage chaque fois dans une rainure de guidage à coulisse (25), de forme environ semi-circulaire, prévue chaque fois dans le clapet de véhicule (3).

10. Dispositif d'ouverture selon la revendication 9, **caractérisé en ce que** les rainures de guidage (25) sont formées dans la tôle interne (26) du clapet de véhicule (3) composé d'une tôle externe (27) et d'une tôle interne (26).
